# EUROPEAN PATENT APPLICATION

(11) **EP 4 436 239 A1**
(43) Date of publication of application: **25.09.2024**
(21) Application number: 22894697.6
(22) Date of filing: 10.11.2022
(51) Int. Cl.: H04W 24/02, H04W 4/06, H04W 36/00

(54) **INFORMATION PROCESSING METHOD AND APPARATUS**

(30) Priority: 17.11.2021 CN 202111364540
(71) Applicant: Datang Mobile Communications Equipment Co., Ltd., Beijing 100085 (CN)
(72) Inventor: WANG, Ruiwei, Beijing 100085 (CN); YAN, Nan, Beijing 100085 (CN)
(74) Representative: dompatent von Kreisler Selting Werner - Partnerschaft von Patent- und Rechtsanwälten mbB
(86) International application number: PCT/CN2022/131049
(87) International publication number: WO 2023/088160

(57) **Abstract**

Embodiments of the present invention provide an information processing method and apparatus. The method is applied to a terminal device, and comprises: acquiring failure information that the terminal device fails, the failure information comprising service information related to an MBS service executed and/or supported by the terminal device; and sending the failure information to a network side device. In the information processing method provided by the embodiments of the present invention, the failure information sent to the network side device by means of flexible configuration comprises the service information related to the MBS service, so as to allow for the network side device to accurately determine the cause of the failure of the terminal device, thereby more accurately optimizing and adjusting network parameters.

## Description

### CROSS-REFERENCE TO RELATED APPLICATION

The present application claims priority to Chinese patent application No. 2021113645404 filed on November 17, 2021, entitled "Information Processing Method and Apparatus", which is hereby incorporated by reference in its entirety.

### FIELD

The present application relates to the field of radio communication, and particular to methods and apparatuses for processing information.

### BACKGROUND

For a user equipment (UE) that is processing multicast/broadcast service (MBS) service, in order to ensure the continuity of MBS service(s), it is not necessary in general for the UE to select a cell with the best signal quality as a target cell for handover or cell reselection once a handover or cell reselection needs to be performed, which may lead to handover failure or radio link failure (RLF) during the handover or cell reselection. The UE generally reports the failure to a network side device through a handover failure report or an RLF report.

After receiving the failure information, such as the RLF report, the handover failure report, etc., the network side device may determine the cause for the failure and adjust the network parameter corresponding to the handover or cell reselection. However, for the MBS service scenario in actual applications, the cause for the failure determined by the network side device based on the failure information reported from the UE is inaccurate, which leads to poor network optimization for the MBS service.

### SUMMARY

To solve the problems in the related art, embodiments of the present application provide methods and apparatuses for processing information.

An embodiment of the present application provides a method for processing information, applied to a terminal device, including:
obtaining failure information for a failure occurring on the terminal device, where the failure information includes service information associated with a multicast/broadcast service (MBS) service performed and/or supported by the terminal device; and
transmitting the failure information to a network side device.

In an embodiment, the service information associated with the MBS service is used to determine, by the network side device, whether to optimize a configured network parameter.

In an embodiment, obtaining the failure information for the failure occurring on the terminal device includes:
obtaining the failure information for the failure occurring on the terminal device in case of determining that a handover failure or a radio link failure (RLF) has occurred.

In an embodiment, the service information associated with the MBS service includes at least one of the following:
a service identifier of the MBS service;
a delivery mode corresponding to the MBS service;
a priority of the MBS service; or
failure indication information;
where the failure indication information is used to represent that the failure occurs since the terminal device does not select an optimal cell for a handover to maintain continuity of a specified service, and the specified service includes the MBS service.

In an embodiment, the delivery mode includes one or more of: receiving MBS service in a broadcast mode, receiving MBS service in a multicast mode, or receiving MBS service in a unicast mode.

In an embodiment, the service information associated with the MBS service further includes a mapping between the delivery mode and the service identifier, where the service identifier of the MBS service includes a temporary mobile group identity (TMGI) and/or a service area identity (SAI).

In an embodiment, the priority of the MBS service includes at least one of the following:
a priority of the delivery mode corresponding to the MBS service; or
priorities of different MBS services in a same delivery mode.

In an embodiment, transmitting the failure information to the network side device includes:
transmitting the failure information to the network side device by carrying the failure information in at least one of the following reports:
an RLF report, a connection establishment failure report, a successful handover report, or a random access report.

An embodiment of the present application further provides a method for processing information, applied to a network side device, including:
receiving failure information transmitted from a terminal device, where the failure information includes service information associated with a multicast/broadcast service (MBS) service performed and/or supported by the terminal device; and
determining whether to optimize a configured network parameter based on the service information associated with the MBS service.

In an embodiment, determining whether to optimize the configured network parameter based on the service information associated with the MBS service includes:
in case that the service information associated with the MBS service includes failure indication information, determining to not optimize the configured network parameter; or
in case that the service information associated with the MBS service does not include failure indication information and the service information associated with the MBS service indicates that the terminal device is performing the MBS service, determining to not optimize the configured network parameter.

An embodiment of the present application further provides a terminal electronic device, including a memory, a transceiver, and a processor,
where the memory is used for storing a computer program, the transceiver is used for transmitting and receiving data under control of the processor, and the processor is used for executing the computer program in the memory and performing the following steps:
obtaining failure information for a failure occurring on the terminal device, where the failure information includes service information associated with a multicast/broadcast service (MBS) service performed and/or supported by the terminal device; and
transmitting the failure information to a network side device.

In an embodiment, the service information associated with the MBS service is used to determine, by the network side device, whether to optimize a configured network parameter.

In an embodiment, the processor executes obtaining the failure information for the failure occurring on the terminal device includes:
obtaining the failure information for the failure occurring on the terminal device in case of determining that a handover failure or a radio link failure (RLF) has occurred.

In an embodiment, the service information associated with the MBS service includes at least one of the following:
a service identifier of the MBS service;
a delivery mode corresponding to the MBS service;
a priority of the MBS service; or
failure indication information;
where the failure indication information is used to represent that the failure occurs since the terminal device does not select an optimal cell for a handover to maintain continuity of a specified service, and the specified service includes the MBS service.

In an embodiment, the delivery mode includes one or more of: receiving MBS service in a broadcast mode, receiving MBS service in a multicast mode, or receiving MBS service in a unicast mode.

In an embodiment, the service information associated with the MBS service further includes a mapping between the delivery mode and the service identifier, where the service identifier of the MBS service includes a temporary mobile group identity (TMGI) and/or a service area identity (SAI).

In an embodiment, the priority of the MBS service includes at least one of the following:
a priority of the delivery mode corresponding to the MBS service; or
priorities of different MBS services in a same delivery mode.

In an embodiment, the processor executes transmitting the failure information to the network side device includes:
transmitting the failure information to the network side device by carrying the failure information in at least one of the following reports:
an RLF report, a connection establishment failure report, a successful handover report, or a random access report.

An embodiment of the present application further provides a network side electronic device, including a memory, a transceiver, and a processor,
where the memory is used for storing a computer program, the transceiver is used for transmitting and receiving data under control of the processor, and the processor is used for executing the computer program in the memory and performing the following steps:
receiving failure information transmitted from a terminal device, where the failure information includes service information associated with a multicast/broadcast service (MBS) service performed and/or supported by the terminal device; and
determining whether to optimize a configured network parameter based on the service information associated with the MBS service.

In an embodiment, the processor executes determining whether to optimize the configured network parameter based on the service information associated with the MBS service includes:
in case that the service information associated with the MBS service includes failure indication information, determining to not optimize the configured network parameter; or
in case that the service information associated with the MBS service does not include failure indication information and the service information associated with the MBS service indicates that the terminal device is performing the MBS service, determining to not optimize the configured network parameter.

An embodiment of the present application further provides an apparatus for processing information, including:
a first obtaining module, used for obtaining failure information for a failure occurring on the terminal device, where the failure information includes service information associated with a multicast/broadcast service (MBS) service performed and/or supported by the terminal device; and
a first transmitting module, used for transmitting the failure information to a network side device.

An embodiment of the present application further provides an apparatus for processing information, including:
a second receiving module, used for receiving failure information transmitted from a terminal device, where the failure information includes service information associated with a multicast/broadcast service (MBS) service performed and/or supported by the terminal device; and
a second determining module, used for determining whether to optimize a configured network parameter based on the service information associated with the MBS service.

An embodiment of the present application further provides a processor-readable storage medium, where the processor-readable storage medium stores a computer program for causing a processor to execute the method for processing information applied to the terminal device or the method for processing information applied to the network side device.

An embodiment of the present application further provides a computer-readable storage medium, where the computer-readable storage medium stores a computer program for causing a processor to execute the method for processing information applied to the terminal device or the method for processing information applied to the network side device.

An embodiment of the present application further provides a chip product, where the chip product stores a computer program for causing a processor to execute the method for processing information applied to the terminal device or the method for processing information applied to the network side device.

In the methods and apparatuses for processing information provided by embodiments of the present application, by flexibly configuring the failure information transmitted to the network side device, which includes the service information associated with the MBS service, the network side device may accurately determine the cause of the failure occurring on the terminal device, and more accurately optimize and adjust the network parameter.

### BRIEF DESCRIPTION OF THE DRAWINGS

In order to clearly illustrate the solutions of the embodiments according to the present application, the accompanying drawings used in the description for the embodiments are briefly introduced below. It should be noted that the drawings in the following description are only some embodiments of the present application. For those of ordinary skill in the art, other drawings may be obtained according to these drawings without creative effort.
FIG. 1 is a first schematic flow chart of a method for processing information according to an embodiment of the present application;
FIG. 2 is a second schematic flow chart of a method for processing information according to an embodiment of the present application;
FIG. 3 is a first schematic implementation diagram of a method for processing information according to an embodiment of the present application;
FIG. 4 is a second schematic implementation diagram of a method for processing information according to an embodiment of the present application;
FIG. 5 is a third schematic implementation diagram of a method for processing information according to an embodiment of the present application;
FIG. 6 is a fourth schematic implementation diagram of a method for processing information according to an embodiment of the present application;
FIG. 7 is a fifth schematic implementation diagram of a method for processing information according to an embodiment of the present application;
FIG. 8 is a schematic structural diagram of a terminal electronic device according to an embodiment of the present application;
FIG. 9 is a schematic structural diagram of a network side electronic device according to an embodiment of the present application;
FIG. 10 is a first schematic structural diagram of an apparatus for processing information according to an embodiment of the present application; and
FIG. 11 is a second schematic structural diagram of an apparatus for processing information according to an embodiment of the present application.

### DETAILED DESCRIPTION

In the embodiments of the present application, the term "and/or" describes the association relationship of the associated objects, indicating that there may be three types of relationship. For example, A and/or B may represent three situations: A exists alone, A and B exist simultaneously, and B exists alone. The character "j" generally indicates that the associated objects are in an "or" relationship.

The term "multiple" in the embodiments of the present application refers to two or more, and other quantifiers are similar to it.

The following provides a clear and complete description for the solutions in the embodiments of the present application in conjunction with the accompanying drawings. The described embodiments are only a part of the embodiments of the present application and not all of them. Based on the embodiments in the present application, all other embodiments obtained by those of ordinary skill in the art without creative labor fall within the scope of protection in the present application.

In order to help understand the solutions of the embodiments of the present application, the following briefly introduces the relevant knowledge that may be involved in the present application.

### 1) Multicast/broadcast service (MBS).

Most of current communications between a network device and UE adopt ordinary unicast, that is, one-to-one, and multicast and broadcast are introduced to support a one-to-many communication while reducing network resource consumption.

For a multicast service, the same service and content are provided to a specific group of users at the same time, and the UE may receive the multicast service in a connected state. For a base station that supports multicast, the base station may use a set of common resources to provide services to a specific set of UEs. When the UE is handed over to a base station that does not support multicast, since the MBS radio bearer (MRB) cannot be established, the service may only be continuously provided through the UE-specific data radio bearer (DRB), that is, multicast service content is transmitted in a unicast mode.

For a broadcast service, the same service and content are provided to all users in a specific area, and the UEs may receive the broadcast service in an idle state, an inactive state or a connected state. When a UE moves in the connected state, it is necessary for the UE to select a cell that supports the same service as a target cell to ensure the continuity of receiving the broadcast service.

A situation for supporting multicast and broadcast between the traditional base stations is achieved through an interaction of the interfaces for neighbor cells, including whether broadcast and/or multicast are supported and a supported specific service type, where the service type may be identified by a temporary mobile group identity (TMGI), or a service area identity (SAI).

The UE may receive the broadcast service in the idle state. Since the UE needs to consider selecting a cell that supports the broadcast service when performing a cell reselection in the idle state, if the UE is receiving a broadcast service or is ready to receive a broadcast service, the UE may set a priority of frequency point for the cell reselection to a high priority.

### 2) Radio link failure (RLF) report.

The RLF report is a report recorded by the terminal side and mainly includes two recording scenarios of a handover failure and an RLF, where one RLF report may only represent a record for one scenario.

The RLF report includes the following content:
a measurement result of a previous serving cell for the terminal;
a measurement result of a neighbor cell after the terminal confirms handover failure or radio link failure;
terminal location information;
identity information of a cell where a failure occurs on the terminal, such as cell global identity (CGI)/physical cell identity (PCI) and frequency point;
identity information of a cell where a re-establishment for the terminal took place;
a timer for the UE reporting, where a period of time elapsed from lastly reception of a handover initiation message to a connection failure;
a cause for the connection failure, such as the handover failure or the RLF;
a cell radio network temporary identity (C-RNTI) used by the terminal in case of connection failure;
a sub-cause for the RLF, such as T310 expiry, or random access problem, or radio link control (RLC) layer reaching maximum retransmission, or beam failure recovery failure (BFRF);
a period of time elapsed from the terminal confirms a connection failure to the terminal reports the RLF report;
a tracking area code (TAC) of a cell where a connection failure occurs;
a blue tooth (BT) associated record result; and
a wireless local area network (WLAN) associated parameter.

After recording the RLF report, the UE notifies the network side to obtain the RLF report through a radio resource control (RRC) connection establishment completion message, an RRC connection reconfiguration completion message, an RRC connection re-establishment completion message, or an RRC recovery completion message. The network side transmits a UE information request message to the UE, and the UE transmits the RLF report to the network through a UE information response message.

### 3) Mobility robustness optimisation (MRO) for handover

MRO is mainly used to solve the failure problem in the process of terminal mobility and assist network optimization. In case of handover failure or RLF, the terminal records the RLF report. The terminal performs a cell selection after the handover failure, and then re-accesses network through RRC connection re-establishment or RRC connection establishment, and notifies the network that RLF report has been reserved at the terminal side. The network side obtains that from the terminal when necessary to assist network parameter configuration optimization for the network side.

MRO is mainly used to discover and solve parameter configuration problems in the mobility process, and three failure types of too early handover, too late handover, and handover to a wrong cell are defined.

Too late handover: an RLF occurs after the terminal has stayed in the source cell for a period of time, and the terminal attempts to access or re-access a different cell through RRC connection re-establishment.

Too early handover: the terminal fails to access the target cell during a handover procedure, or an RLF occurs shortly after a successful access to the target cell, and the terminal attempts to access or re-access the source cell through RRC connection re-establishment.

Handover to a wrong cell: the terminal fails to access the target cell during a handover procedure, or an RLF occurs shortly after a successful access to the target cell, and the terminal attempts to access or re-access another cell different from both the target cell and the source cell through RRC connection re-establishment.

The network side device optimizes a handover configuration parameter to solve the problems of too late handover, too early handover, or handover to the wrong cell.

4) Random access report, connection establishment failure report, and successful handover report.

The random access report includes associated information of a successful random access.

The connection establishment failure report records associated information of a random access failure.

The successful handover report includes information recorded by the UE during the handover procedure. Although the handover succeeds, there may be some critical success or critical failure information, which is used to assist the network in optimizing the handover parameter after being recorded by the UE.

After recording the connection establishment failure report, the random access report, or the successful handover report, the UE notifies the network side device to obtain that through the RRC connection establishment completion message, the RRC connection reconfiguration completion message, the RRC connection re-establishment completion message, or the RRC recovery completion message. The network side device transmits the UE information request message to the UE, the UE transmits the connection establishment failure report and/or the random access report and/or the successful handover report to the network side device through the UE information response message, and the network side device optimizes and adjusts parameter to solve the recorded failure situations.

In the present application, the network side device may be assisted in identifying the cause of the failure when a MBS service is initiated by including MBS associated information in the failure information transmitted from the terminal device, and reasonable parameter optimization and adjustment may be performed.

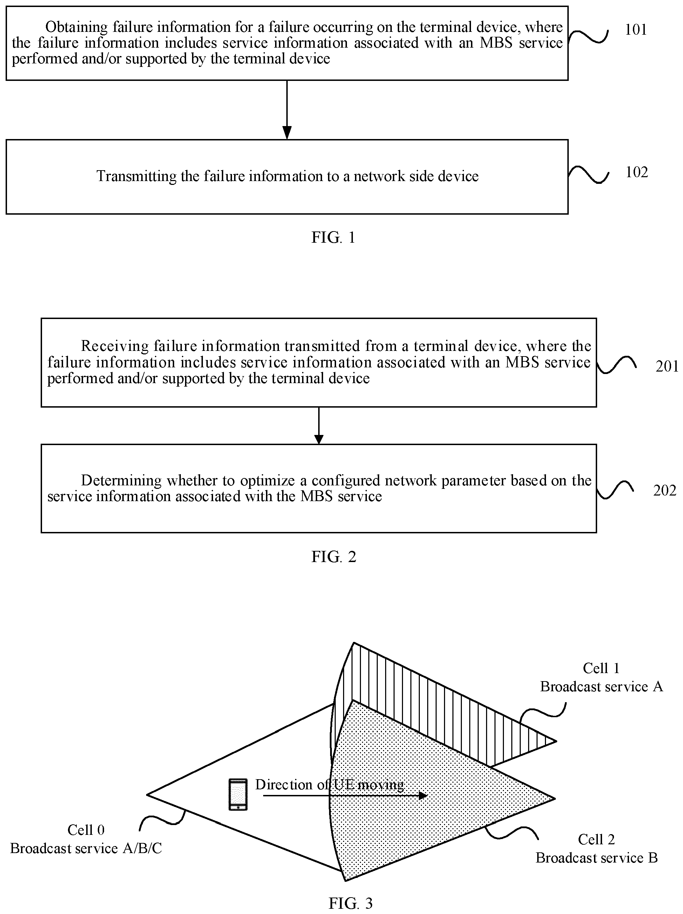

FIG. 1 is a first schematic flow chart of a method for processing information according to an embodiment of the present application. As shown in FIG. 1, an embodiment of the present application provides a method for processing information, and the executing entity of this method may be a terminal device, such as a mobile phone and the like. The method includes:
step 101: obtaining failure information for a failure occurring on the terminal device, where the failure information includes service information associated with an MBS service performed and/or supported by the terminal device; and
step 102: transmitting the failure information to a network side device.

A traditional MBS service may support delivery modes of unicast, multicast, broadcast, etc., a terminal device and a network side device may support the MBS service in one or more of the above delivery modes, and multiple different MBS services may be included in a same delivery mode. In case that the terminal device performs certain designated services, such as MBS service or no MBS service, and when the terminal device moves in the connected state or the quality of the current serving cell decreases, the terminal device generally needs to select a cell that supports the same service as the target cell and a failure may occur. The terminal device in the embodiments of the present application records the above failure information, where the failure information includes service information associated with the MBS service executed and/or supported by the terminal device.

The above failure information may include the following three types.

Type 1: the service information associated with the MBS service performed by the terminal device, which represents the service information associated with the MBS service currently being performed by the terminal device, for example, a received specific MBS service, a delivery mode of each MBS service, a priority of multiple MBS services, etc.

Type 2: the service information associated with the MBS service supported by the terminal device, which represents the MBS service supported by the terminal device, and the MBS service is currently not being performed.

Type 3: a combination of type 1 and type 2.

The existing content recorded by the terminal device is supplemented by recording the above newly added failure information associated with the MBS service, improving the content of the failure information recorded by the terminal device.

The network side device may obtain the failure information recorded by the terminal device through an associated message, for example, obtain the failure information by transmitting a UE information request message to the terminal device, and the network side device may accurately determine the cause of failure occurring on the terminal device.

In the method for processing information provided by embodiments of the present application, by flexibly configuring the failure information transmitted to the network side device, which includes the service information associated with the MBS service, the network side device may accurately determine the cause of the failure occurring on the terminal device, and more accurately optimize and adjust the network parameter.

In an embodiment, the service information associated with the MBS service is used to determine, by the network side device, whether to optimize a configured network parameter.

The failure information recorded by the terminal device includes the service information associated with the MBS service. The recorded failure information is more detailed and covers a wider scope by adding the service information associated with the MBS service in the traditional record information, which facilitates the network side device to accurately determine the cause of failure occurring on the terminal device, and more accurately optimize and adjust the network parameter based on the above failure information.

In the method for processing information provided by embodiments of the present application, by flexibly configuring the failure information transmitted to the network side device, which includes the service information associated with the MBS service, the network side device may accurately determine the cause of the failure occurring on the terminal device, and more accurately optimize and adjust the network parameter.

In an embodiment, obtaining the failure information for the failure occurring on the terminal device includes:
obtaining the failure information for the failure occurring on the terminal device in case of determining that a handover failure or an RLF has occurred.

When the terminal device moves in the connected state or the quality of the current serving cell decreases, the terminal device generally needs to select a cell that supports the same service as the target cell, and there may be states of too late handover, too early handover, or handover to a wrong cell, etc., that is, in the situation that the handover failure or the RLF occurs, the terminal device may record the associated failure information and transmit it to the network side device, so that the network side device may determine whether or not to optimize the network parameter configuration based on the failure information. For the situation that the network parameter configuration does not need to be optimized, generally, a handover failure or an RLF occurs on the terminal device, which is caused by the terminal not selecting the cell with the optimal signal as the target cell to maintain service continuity. For the situation that the network parameter configuration needs to be optimized, for example, the threshold for handover of the target cell is too high or the threshold for handover of the source cell is too low, as a result, the terminal device is handed over too early, handed over too late, or handed over to a wrong cell, and there is a handover failure or an RLF.

In the method for processing information provided by embodiments of the present application, by flexibly configuring the failure information transmitted to the network side device, which includes the service information associated with the MBS service, the network side device may accurately determine the cause of the failure occurring on the terminal device, and more accurately optimize and adjust the network parameter.

In an embodiment, the service information associated with the MBS service includes at least one of the following:
a service identifier of the MBS service;
a delivery mode corresponding to the MBS service;
a priority of the MBS service; or
failure indication information;
where the failure indication information is used to represent that the failure occurs since the terminal device does not select an optimal cell for handover to maintain continuity of a specified service, and the specified service includes the MBS service.

The service information associated with the MBS service recorded by the terminal device indicates whether the terminal device currently receives the MBS service and the MBS service specifically include what MBS service, which is indicated by the service identifier of the MBS service, types of delivery mode of each MBS service, the priority of each MBS service, etc. At the same time, the service information associated with the MBS service recorded by the terminal device may further include the failure indication information and thus the network side device may more directly and accurately determine that failure is caused by the terminal not selecting the optimal cell for handover to maintain the continuity of the specified service based on the service information associated with the MBS service.

The service identifier of the MBS service indicates the MBS service specifically performed by the terminal device, for example, a service identifier 001 represents an MBS service A, and a service identifier 002 represents an MBS service B. In addition, if the terminal device does not receive MBS service currently, the corresponding service identifier is empty.

The delivery mode of the MBS service indicates the delivery mode of the MBS service being performed by the terminal device, or indicates that the terminal device is not performing the MBS service. For example, in case that the terminal device is performing the MBS service and the terminal device is currently receiving multicast services A and B, it may be expressed as {multicast A, multicast B}; in case that the terminal device is performing the MBS service and the terminal device is currently receiving the multicast services A and B, and a broadcast service C, it may be expressed as {(multicast A, multicast B), broadcast C}; in case that the terminal device is not performing the MBS service, it may be expressed as {multicast False, broadcast False}.

The priority of the MBS service indicates the priority for selecting specific MBS services when the terminal device performs a handover. When there is a corresponding MBS service with a high priority, combining with the specific MBS service currently received by the terminal device, the terminal device first selects the service type with the high priority, and then selects the appropriate service type in order of priority. For example, the terminal device is receiving MBS multicast service A and MBS multicast service B in the multicast mode in cell 0, the priority of the delivery mode corresponding to the MBS service is {transmitting MBS broadcast service in broadcast mode, transmitting MBS multicast service in multicast mode, transmitting MBS multicast service in unicast mode}, a corresponding neighbor cell 1 supports transmitting MBS broadcast service A in broadcast mode, a neighbor cell 2 supports transmitting multicast service A and multicast service B in multicast mode, and a neighbor cell 3 supports transmitting multicast service A in multicast mode, then the terminal device is handed over to the neighbor cell 2 first to maintain continuity of the MBS service, or the terminal device is handed over to the neighbor cell 3 if the neighbor cell 2 does not exist.

The failure indication information may be identified by 1 bit or multiple bits. For example, when the failure indication information is identified by 1 bit, of which the value is 0 or 1. When the value is 0, it means that the cause of the failure is not that the terminal device did not select the optimal cell for handover for the purpose of maintaining the continuity of other services; when the value is 1, it means that the failure occurs since the terminal device did not select the optimal cell for handover for the purpose of maintaining the continuity of the MBS service. Alternatively, when the failure indication information is identified by 2 bits, there may be 4 values, and different values corresponding to different scenarios. For example, when the value is 00, it means that the failure occurs since the terminal device did not select the optimal cell for handover, for the purpose of maintaining the continuity of a specified service, where the specified service is a service other than the MBS service, and the specified service also needs to maintain its service continuity; when the value is 01, it means that the failure occurs since the terminal device did not select the optimal cell for handover, for the purpose of maintaining the continuity of the MBS service; when the value is 10, it means that the failure occurs since the terminal is limited by the function of a specified service and does not select the optimal cell for handover, where the specified service is a service other than MBS service, and the specified service also needs to maintain its service continuity; and when the value is 11, it means the reserved bits. The above is only an illustrative description and does not limit the specific expression of the identification bit that affects the network parameter optimization in the present application.

In the method for processing information provided by embodiments of the present application, by flexibly configuring the failure information transmitted to the network side device, which includes the service information associated with the MBS service, the service information associated with the MBS service may be configured through the service identifier of the MBS service, the delivery mode corresponding to the MBS service, the priority of the MBS service, and the failure indication information, and the information related to MBS service failure is flexibly recorded, so that the network side device may accurately determine the cause of the failure occurring on the terminal device, and more accurately optimize and adjust the network parameter.

In an embodiment, the delivery mode includes one or more of receiving the MBS service in broadcast mode, receiving the MBS service in multicast mode, or receiving the MBS service in unicast mode.

There may be one or more delivery modes corresponding to the MBS service performed by the terminal device, including one or more of: receiving the MBS service in the broadcast mode, receiving the MBS service in the multicast mode, and receiving the MBS service in the unicast mode. Unicast is a one-to-one communication mode, broadcast and multicast are both one-to-many communication modes, broadcast has a wider range, and multicast performs one-to-many communication within a certain range, where in the term "one-to-many", "one" refers the network side device, and "many" refers the terminal device. The terminal device may support one or more of receiving the unicast service in unicast mode, receiving the MBS broadcast service in broadcast mode, receiving the MBS multicast service in multicast mode, or receiving the MBS in unicast mode. The network device may support one or more of transmitting the unicast service in unicast mode, transmitting the MBS broadcast service in broadcast mode, transmitting the MBS multicast service in multicast mode, or transmitting the MBS service in unicast mode.

In the method for processing information provided by embodiments of the present application, by flexibly configuring the failure information transmitted to the network side device, which includes the service information associated with the MBS service, the network side device may accurately determine the cause of the failure occurring on the terminal device, and more accurately optimize and adjust the network parameter.

In an embodiment, the service information associated with the MBS service further includes a mapping between the delivery mode and the service identifier, where the service identifier of the MBS service includes a temporary mobile group identity (TMGI) and/or a service area identity (SAI).

The service information associated with the MBS service further includes the mapping between the delivery mode and the service identifier, that is, there may be a one-to-one or one-to-many mapping between a specific MBS service and the delivery mode of the MBS service. For example, the delivery mode corresponding to a same MBS multicast service M may be unicast and multicast. Similarly, there may be different MBS services in the same delivery mode. For example, in the multicast delivery mode, there are an MBS multicast service N, an MBS multicast service P, and an MBS multicast service Q. The specific MBS service may be identified by TMGI and/or SAI.

For example, when the UE is currently receiving the MBS broadcast service in broadcast mode or not in broadcast mode, the UE needs to record the received MBS broadcast service in a form of a list, where each node in the list represents an MBS broadcast service, and the MBS broadcast service may be identified by TMGI and/or SAI;
when the UE is currently receiving MBS multicast service in multicast mode or not in multicast mode, the UE needs to record the received MBS multicast service in a form of a list, where each node in the list represents an MBS multicast service, and the MBS multicast service may be identified by TMGI and/or SAI; and
when the UE is currently receiving MBS multicast service in unicast mode or not in unicast mode, the UE needs to record the received MBS multicast in a form of a list, where each node in the list represents an MBS multicast service, and the MBS multicast service may be identified by TMGI and/or SAI.

When the UE is currently receiving the MBS broadcast service in broadcast mode or not in broadcast mode, the corresponding delivery mode "receiving the MBS broadcast service in broadcast mode" may be set as true or false. For example, if the delivery mode is set as true, it means that the UE is currently receiving the MBS broadcast service in broadcast mode; if the delivery mode is set as false, it means that the UE is currently receiving the MBS broadcast service not in broadcast mode. Other delivery modes of the MBS service may also adopt similar modes. When the terminal device performs MBS services in multiple delivery modes at the same time, the mapping between the delivery modes and the service identifiers included in the service information associated with the MBS service recorded by the UE is shown in Table 1:

**Table 1**

| Unicast | |
|---|---|
| | Unicast A |
| | Unicast B |
| Receiving the MBS broadcast service in a broadcast mode | True/False |
| | MBS broadcast service C |
| | MBS broadcast service D |
| Receiving the MBS multicast service in a multicast mode | True/False |
| | MBS multicast service E |
| | MBS multicast service F |
| Receiving the MBS multicast service in a unicast mode | True/False |
| | Receiving MBS multicast service G in unicast mode |
| | Receiving MBS multicast service H in unicast mode |

The specific MBS service may be identified by TMGI and/or SAI. For example, the MBS broadcast service C received in the broadcast mode may be identified by TMGI C, the MBS multicast service F received in the multicast mode may be identified by SAI F, etc.

The priority of the MBS service may be determined based on the order in which the MBS appear in the list.

The TMGI identifier is used to identify the multicast bearer services of different groups, and each group is assigned a TMGI identifier.

The SAI identifier is used to indicate the area where the corresponding MBS service is provided, and may be included in the system information of the cell.

In the method for processing information provided by embodiments of the present application, by flexibly configuring the failure information transmitted to the network side device, which includes the service information associated with the MBS service, the network side device may accurately determine the cause of the failure occurring on the terminal device, and more accurately optimize and adjust the network parameter.

In an embodiment, the priority of the MBS service includes at least one of the following:
a priority of the delivery mode corresponding to the MBS service; or
priorities of different MBS services in the same delivery mode.

The service information associated with the MBS service included in the failure information transmitted from the terminal device may also include the priority of the MBS service.

The above priorities of the service types may include {the priority of the delivery mode corresponding to the MBS service, the priorities of different MBS services in the same delivery mode}; or {the priority of the delivery mode corresponding to the MBS service}; or {the priorities of different MBS services in the same delivery mode}. The priority of the delivery mode corresponding to the MBS service indicates the priority among the four of receiving the MBS multicast service in the multicast mode, receiving the MBS broadcast service in the broadcast mode, receiving the MBS multicast service in the unicast mode, and receiving the MBS broadcast service in the unicast mode.

The priorities of different MBS services in the same delivery mode indicate that there may be multiple MBS services in the same delivery mode, and indicate the priority of the multiple MBS services in the delivery mode.

The priorities of different MBS services include multiple types, for example:
priorities among a normal unicast service, the MBS multicast service transmitted in unicast mode, the MBS multicast service transmitted in multicast mode, and the MBS broadcast service transmitted in broadcast mode;
priorities among multiple MBS multicast services transmitted in multicast mode;
priorities among multiple MBS broadcast services transmitted in broadcast mode; and
priorities among multiple MBS multicast services transmitted in unicast mode.

In the method for processing information provided by embodiments of the present application, by flexibly configuring the failure information transmitted to the network side device, which includes the service information associated with the MBS service, the network side device may accurately determine the cause of the failure occurring on the terminal device, and more accurately optimize and adjust the network parameter.

In an embodiment, transmitting the failure information to the network side device includes:
transmitting the failure information to the network side device by carrying the failure information in at least one of the following reports:
an RLF report, a connection establishment failure report, a successful handover report, or a random access report.

The failure information may be transmitted by being carried in multiple traditional reports, such as the RLF report, the connection establishment failure report, the successful handover report, and the random access report.

The RLF report generally includes information of the handover failure or the RLF recorded by the terminal device;
the connection establishment failure report generally includes random access failure associated information recorded by the terminal device during the random access procedure;
the successful handover report generally includes corresponding record information after the terminal device performs a handover and is successfully handed over to a target cell; and
the random access report generally includes associated information recorded by the terminal device upon completion of the random access procedure during the random access procedure.

None of the above reports in the related art may indicate the MBS service currently being received by the terminal device, and the failure information including service information associated with the MBS service is added to the traditional reports in the present application. The terminal may record information of whether the MBS service is currently received, the specific service identifier of the received MBS service, the priority of the associated MBS, etc., through the failure information. The failure information is transmitted to the network side device, and the network side device may accurately determine the cause of the failure occurring on the terminal device based on the failure information.

In the method for processing information provided by embodiments of the present application, by flexibly configuring the failure information transmitted to the network side device, which includes the service information associated with the MBS, the network side device may accurately determine the cause of the failure occurring on the terminal device, and more accurately optimize and adjust the network parameter.

FIG. 2 is a second schematic flow chart of a method for processing information according to an embodiment of the present application. As shown in FIG. 2, the method is applied to a network side device, including:
step 201, receiving failure information transmitted from a terminal device, where the failure information includes service information associated with an MBS service performed and/or supported by the terminal device; and
step 202, determining whether to optimize a configured network parameter based on the service information associated with the MBS service.

When there is a handover failure or an RLF occurs on the terminal device, the associated failure information is recorded. The network side device may obtain the associated failure information recorded by the terminal device through a corresponding instruction, for example, transmitting UE information request message to the terminal device, and the terminal device transmits the above-mentioned failure information to the network side device, where the failure information includes the service information associated with the MBS service by adding the service information associated with the MBS service in normal reports. The normal reports include at least one of an RLF report, a connection establishment failure report, a successful handover report, or a random access report.

After receiving the failure information, the network side device determines whether to optimize the configured network parameter based on the service information associated with the MBS service included in the failure information. The configured network parameter may include parameters such as a handover parameter. For the situation that the configuration of the network parameter does not need to be optimized, the handover failure or the RLF occurring on the terminal device is generally caused by the terminal device not selecting the optimal cell as a target cell to maintain the continuity of a specified service. The specified service includes the MBS service. For the situation that the configuration of the network parameter needs to be optimized, for example, a threshold for handover of the target cell is too high or a threshold for handover of the source cell is too low, as a result, the terminal device is handed over too early, handed over too late, or handed over to a wrong cell, and the handover failure or RLF occurs.

The failure information includes the service information associated with the MBS service, the specific associated parameter included, as well as the specific meaning and function of the parameter, have been described in detail in the embodiments for the terminal device side, the problems it solved on the terminal device and the corresponding effects are the same as those on the network side and are not described again herein.

In the method for processing information provided by embodiments of the present application, by flexibly configuring the failure information transmitted to the network side device, which includes the service information associated with the MBS, the network side device may accurately determine the cause of the failure occurring on the terminal device, and more accurately optimize and adjust the network parameter.

In an embodiment, determining whether to optimize the configured network parameter based on the service information associated with the MBS service includes:
in case that the service information associated with the MBS service includes the failure indication information, determining to not optimize the configured network parameter, where the network parameter includes a handover parameter; or
in case that the service information associated with the MBS service does not include the failure indication information and the service information associated with the MBS service indicates that the terminal device is performing the MBS service, determining to not optimize the configured network parameter, where the network parameter includes the handover parameter.

The network side device determines, based on the received failure information transmitted from the terminal device and the service information associated with the MBS service included in the failure information, whether the terminal device is performing the MBS service and the failure occurs, or the failure is caused by the terminal device not selecting the optimal cell for handover to maintain the continuity of the specified service. In case that the service information associated with the MBS service includes the failure indication information, it means that in order to maintain the continuity of the specified service, there is a handover failure or an RLF occurring on the terminal device, and the network side device does not need to optimize the configured network parameter, where the network parameter includes the handover parameter, a re-selection parameter, etc.

Alternatively, in case that the service information associated with the MBS service does not include the failure indication information and it may be determined, based on other parameters included in the service information associated with the MBS service, that the terminal device is performing the MBS service, the network side device does not need to optimize the configured network parameter. The above-mentioned other parameters include at least one of the service identifier of the MBS service, the delivery mode corresponding to the MBS service, or the priorities of different MBS services. For example, if the service identifier of the MBS service in the service information associated with the MBS service is non-empty, the MBS service that the terminal is performing is determined based on the service identifier of the MBS service, or if the delivery mode corresponding to a certain MBS service is configured to be true, the MBS service that the terminal is performing is determined based on the delivery mode corresponding to the certain MBS, or the MBS service that the terminal is performing is determined based on the service identifier corresponding to the MBS service in the priority of the MBS service being non-empty or the delivery mode corresponding to a certain MBS being configured as true.

Alternatively, in case that the service information associated with the MBS service does not include the failure indication information and it may be determined, based on other parameters included in the service information associated with the MBS service, that the terminal device is not performing MBS service, the network side device needs to optimize the configured network parameter. The above-mentioned other parameters include at least one of the service identifier of the MBS service, the delivery mode corresponding to the MBS service, or the priorities of different MBS services. For example, if the service identifier of the MBS service in the service information associated with the MBS service is empty, it is determined that the terminal does not perform the MBS service; or, if the delivery mode corresponding to the MBS service is configured to be false, it is determined that the terminal does not perform the MBS service; or, if the service identifier of the MBS service in the service information associated with the MBS service is empty or the corresponding delivery mode is configured to be false, it is determined that the terminal does not perform the MBS service.

In the method for processing information provided by embodiments of the present application, by flexibly configuring the failure information transmitted to the network side device, which includes the service information associated with the MBS service, the network side device may accurately determine the cause of the failure occurring on the terminal device, and more accurately optimize and adjust the network parameter.

The method for processing information provided by the present application is described with examples in the following embodiments.

FIG. 3 is a first schematic implementation diagram of a method for processing information according to an embodiment of the present application. FIG. 3 shows a scenario where a failure is caused by a UE maintaining a continuity of an MBS broadcast service in a connected state.

A cell 0 supports transmitting an MBS broadcast service A, an MBS broadcast service B, and an MBS broadcast service C in a broadcast mode, a cell 1 supports transmitting the MBS broadcast service A in the broadcast mode, and a cell 2 supports transmitting the MBS broadcast service B in the broadcast mode.

Assuming a UE0 is receiving the MBS broadcast service C in the broadcast mode and when the UE0 moves to a boundary of the cell 0, since no neighbor cell supports transmitting the MBS broadcast service C in the broadcast mode, the UE0 does not trigger handover, resulting in an RLF, and triggers an RRC connection re-establishment to select the cell 2 or cell 1. A network side device receives failure information such as an RLF report recorded by the UE0 and determines the handover is too late. Therefore, the network side device adjusts a handover parameter configuration threshold to trigger the handover to the cell 2 or the cell 1 in advance. However, in fact, the failure is caused by not selecting a target cell to maintain MBS service continuity, and the handover threshold should not be adjusted.

A solution for solving the problem is to add broadcast associated information to the failure information such as the RLF report, including the MBS service currently received by the UE in the broadcast mode.

The MBS broadcast service currently received by the UE in the broadcast mode may be a list, where each node of the list represents an MBS broadcast service, and the service identifier of a specific MBS service may be identified by TMGI and/or SAI.

By the recorded above information, the network side device may learn the following when analyzing the failure information report:
the UE0 receives the MBS broadcast service C in the broadcast mode in the cell 0, and cannot select a suitable target cell to continue transmitting the MBS broadcast service C in the broadcast mode, resulting in the RLF, which is not a reason to optimize the parameter configuration.

Assuming a UE1 is receiving the MBS broadcast service A and the MBS broadcast service B in the broadcast mode, where the priority of the MBS broadcast service A is higher than the priority of the MBS broadcast service B, and when the UE1 moves to a boundary of the cell 0, since no neighbor cell simultaneously supports transmitting the MBS broadcast service A and MBS broadcast service B in the broadcast mode, the UE1 may only select a neighbor cell that supports transmitting the MBS broadcast service A or the MBS broadcast service B in the broadcast mode. The UE1 will select the cell 1 since the priority of the MBS broadcast service A is higher than the priority of the MBS broadcast service B, although the cell 2 is facing UE1 and the signal quality of cell 2 is generally better. If the UE1 fails to be handed over to the cell 1, the UE1 initiates an RRC connection re-establishment request to be connected to the cell 2. The network side device receives the failure information such as the RLF recorded by the UE1 and the like, determines that the UE1 is handed over to a wrong cell, and may adjust a configuration threshold of the handover parameter to make it easier to be handed over to the cell 2. However, in fact, the failure is caused by not selecting the target cell 2 to maintain the continuity of the high-priority MBS service A, and the handover threshold should not be adjusted.

A solution is to record priority information of the UE broadcast service in the failure information such as the RLF report and the like, and record the priority information of each type of broadcast service. The network side device may learn, when analyzing the failure information such as the RLF report and the like, that the failure on the UE is caused by the priority of the broadcast but not the network parameter configuration, and the handover parameter does not need to be optimized.

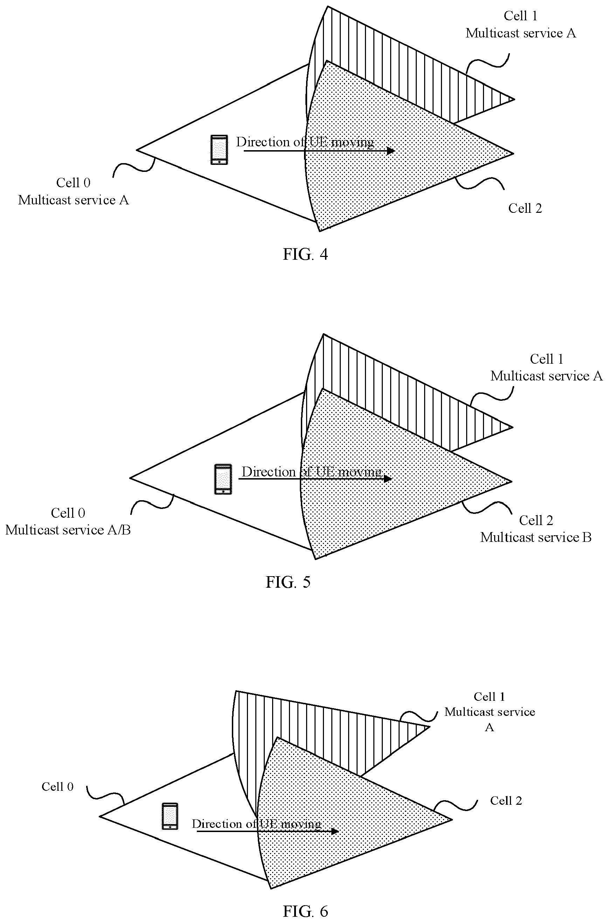

FIG. 4 is a second schematic implementation diagram of a method for processing information according to an embodiment of the present application. FIG. 4 shows a scenario where a failure is caused by a UE maintaining the continuity of an MBS multicast service in a connected state.

The multicast service is similar to the broadcast service, the difference is that an normal unicast mode may be established to provide the MBS multicast service for the UE when a cell does not support transmitting the MBS multicast service in the multicast mode. However, the one-to-one mode will consume more network resources. Therefore, the UE will select, as much as possible, the target cell that supports transmitting the MBS multicast service in the multicast mode when the UE moves and selects a target cell.

As shown in FIG. 4, both the cell 0 and the cell 1 supports transmitting the MBS multicast service A in the multicast mode, and the cell 2 does not support transmitting the MBS service in the multicast mode. The UE moves from the cell 0 to the cell 1.

Assuming the UE0 is receiving the MBS multicast service A in the multicast mode and when the UE0 moves to a boundary of the cell 0, since the cell 1 supports transmitting the MBS multicast service A in the multicast mode, the cell 1 is selected preferentially, although the signal quality of the cell 1 may be lower than that of the cell 2. If the UE0 fails to be handed over to the cell 1, the UE0 transmits the RRC connection re-establishment request, and the UE0 is handed over to the cell 2. The network side device receives the failure information such as the RLF report recorded by the UE0 and the like, determines that the UE0 is handed over to a wrong cell, and adjusts the configuration threshold of the handover parameter to make it easier to be handed over to the cell 2. However, in fact, the failure is caused by not selecting the target cell 2 to maintain the continuity of the MBS multicast service A transmitted in the multicast mode, and the handover threshold should not be adjusted.

A solution is to add information associated with the transmitted MBS multicast service in the multicast mode in the failure information such as the RLF report and the like, where the information includes the currently received MBS multicast service of the UE in the multicast mode, and a list may be adopted, where each node of the list represents an MBS multicast service, and the MBS multicast service may by identified by the TMGI and/or SAI. The network side device may learn, when analyzing the failure information such as the RLF report and the like, that the failure on the UE is caused by maintaining the continuity of the MBS multicast service transmitted in the multicast mode but not the network parameter configuration, and the handover parameter does not need to be optimized.

FIG. 5 is a third schematic implementation diagram of a method for processing information according to an embodiment of the present application. FIG. 5 shows a scenario where a failure is caused by a UE maintaining the continuity of an MBS multicast service in a connected state.

As shown in FIG. 5, the cell 0 supports transmitting the MBS multicast service A and the MBS multicast service B in the multicast mode, the cell 1 supports transmitting the MBS multicast service A in the multicast mode, and the cell 2 support transmitting the MBS multicast service B in the multicast mode. The UE moves from the cell 0 to the cell 1.

Assuming the UE1 is receiving the MBS multicast service A and the MBS multicast service B in the multicast mode, where the priority of the MBS multicast service A is higher than the priority of the MBS multicast service B, and when the UE1 moves to a boundary of the cell 0, since no neighbor cell supports transmitting the MBS multicast service A and the MBS multicast service B in the multicast mode, the UE1 may only select the cell 1 (transmitting the MBS multicast service A in the multicast mode and transmitting the MBS multicast service B in the unicast mode) or the cell 2 (transmitting the MBS multicast service B in the multicast mode and transmitting the MBS multicast service A in the unicast mode). Since the priority of transmitting the MBS multicast service A in the multicast mode by UE is higher than that of transmitting the MBS multicast service B, selecting the cell 1 is more conducive to transmitting the MBS multicast service A in the multicast mode, although the cell 2 is facing the UE1 and the signal quality of cell 2 is generally better. If the UE1 is failed to be handed over to the cell 1, the UE1 initiates an RRC connection re-establishment request to connect the cell 2. The network side device receives the failure information such as the RLF report recorded by the UE1 and the like, determines that the UE1 is handed over to a wrong cell, and adjusts a configuration threshold of the handover parameter to make it easier to be handed over to the cell 2. However, in fact, the failure is caused by not selecting the target cell 2 to main the continuity of the high-priority MBS multicast service A, and the handover threshold should not be adjusted.

A solution is to record priority information of the transmitted MBS multicast service in the multicast mode in the failure information such as the RLF report and the like, that is, record the priority information of each MBS multicast service. The network side device may learn, when analyzing the failure information such as the RLF report and the like, that the failure is caused by the UE selecting based on the priority of the MBS multicast service but not the parameter configuration, and the handover parameter does not need to be adjusted.

FIG. 6 is a fourth schematic implementation diagram of a method for processing information according to an embodiment of the present application. FIG. 6 shows a scenario where the MBS multicast service is transmitted in the unicast mode.

The unicast mode for transmitting the MBS multicast service may be established when a cell does not support transmitting the MBS multicast service in the multicast mode, and obviously, this mode consumes more network resources.

As shown in FIG. 6, neither the cell 0 nor the cell 2 supports transmitting the MBS multicast service in the multicast mode, and the cell 1 supports transmitting the MBS multicast service A in the multicast mode.

It is more reasonable to select the cell 1 when the UE0 is transmitting the MBS multicast service A in the unicast mode in cell 0 and needs to be handed over to a target cell since the cell 1 supports transmitting the MBS multicast service A in the multicast mode. If the UE0 fails to be handed over to the cell 1, the UE0 initiates an RRC connection re-establishment request to connect to the cell 2. The network side device receives the failure information such as the RLF report recorded by the UE0 and the like, determines that the UE0 is handed over to a wrong cell, and adjusts a configuration threshold of the handover parameter to make it easier to be handed over to the cell 2. However, in fact, the failure is caused by not selecting the target cell 2 to maintain the continuity of transmitting the MBS multicast service A in the multicast mode, and the handover threshold should not be adjusted.

A solution is to add information associated with the received MBS multicast service in the unicast mode in the failure information such as the RLF report and the like, including the currently received MBS multicast service in the unicast mode for the UE, and a list may be adopted, where each node of the list represents an MBS multicast service, and the MBS multicast service may be identified by the TMGI and/or SAI.

Further, in the scenario where priority-associated information of transmitting the MBS multicast service in the unicast mode, transmitting the MBS multicast service in the multicast mode, and transmitting the MBS broadcast service in the broadcast mode is included in the service information associated with the MBS service, the services that the UE may perform include the normal unicast, receiving the MBS multicast service in the unicast mode, receiving the MBS multicast service in the multicast mode, and receiving the MBS broadcast service in the broadcast mode. If all ongoing MBS service requirements cannot be met at the same time when a target cell is selected for handover, it is necessary to consider first ensuring the normal unicast, transmitting the MBS multicast service in the unicast mode, transmitting the MBS multicast service in the multicast mode, or transmitting the MBS broadcast service in the broadcast mode. Similar to the scenarios in FIG. 3 to FIG. 6, the target cell with the optimal signal quality may not be selected due to the priority, the handover failure may occur, and the failure information such as the RLF report and the like also needs to be recorded to prevent the network side device from wrongly optimizing the parameter.

Information of priorities of the normal unicast, transmitting the MBS multicast service in the unicast mode, transmitting the MBS multicast service in the multicast mode and transmitting the MBS broadcast service in the broadcast mode are recorded in the RLF report.

In addition, taking into account the impact of broadcast/multicast on MRO functionality, the impact mainly is that the base station needs to consider maintaining the current MBS service when selecting the target cell for handover to maintain the current service for the UE, resulting in the selected cell is not the cell with the best signal quality. When performing traditional MRO, the network side device only takes into account the highest handover success rate and does not take into account the service requirement of an individual UE, or else since different UEs have different requirements, it is difficult to reach a consensus on network parameter configuration to satisfy all UEs. For the UE requirement for broadcast/multicast service, when the UE cannot select the best quality cell to maintain service continuity, an identifier bit may be recorded in the failure information such as the RLF report and the like, which represents that the failure may be caused by maintaining the MBS, and the network side device does not need to adjust the network handover parameter when performing the MRO. In addition to MBS, the UE may be unable to select the cell with the best quality due to limitations of other features and functions, and the individual requirements and limitations of such UE should not affect the MRO function of the network, and the identifier bit may be used.

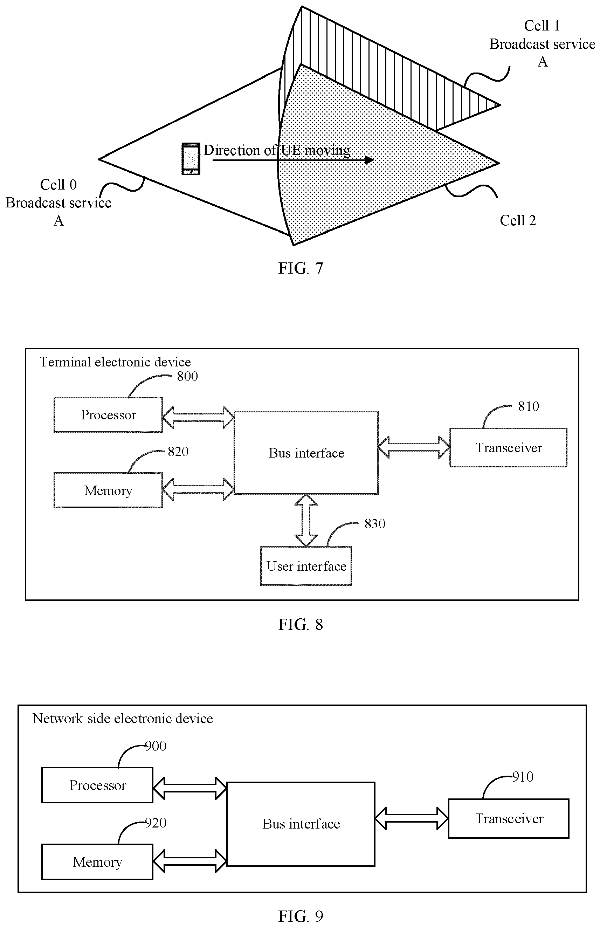

FIG. 7 is a fifth schematic implementation diagram of a method for processing information according to an embodiment of the present application. FIG. 7 shows a scenario where the continuity of receiving the MBS broadcast service in the broadcast mode is maintained by a UE in a non-connected state.

The multicast service may only be received in the connected state, while the broadcast service may not only be received in the connected state, but also may by received by the UE in the idle state or inactive state in the broadcast mode.

A cell reselection is performed when the UE moves in the non-connected state, in addition to meeting the signal quality requirement, the re-selected cell also needs to be able to maintain the continuity of the MBS broadcast service. Therefore, the selected cell may not be the cell with the best signal quality, the random access to the cell fails, and the failure information is recorded in the connection establishment failure report.

As shown in FIG. 7, the cell 0 and the cell 1 support transmitting the MBS broadcast service A in the broadcast mode, and the cell 2 does not support transmitting the MBS multicast service in the multicast mode. The UE in the non-connected state moves from the cell 0 to the cell 1.

The UE may normally select the cell 2 based on a cell reselection configuration. However, the UE selects the cell 1 to maintain the continuity of the MBS broadcast service transmitted in the broadcast mode, a subsequent random access failure may occur on the cell 1, and a connection failure report is recorded. The network side device receives the connection failure report and optimizes the cell reselection parameter so that the UE does not select the cell 1 by mistake. However, in fact, the failure is caused by maintaining the continuity of the broadcast service, there is no problem with the cell reselection parameter and no need to optimize the configuration of the network parameter.

A solution is to add information associated with transmitting the MBS broadcast service in the broadcast mode in the connection establishment report, including the MBS broadcast service currently received by the UE in the broadcast mode, and a list may be adopted, where each node of the list represents an MBS broadcast service, and the specific MBS broadcast service may be identified by the TMGI and/or SAI.

Similarly, the priorities of different MBS broadcast services may also affect the result of the cell reselection when the UE receives multiple MBS broadcast services in the broadcast mode. The principle is similar to that in the scenario in FIG. 3, and a solution is to add the priority information of the received MBS broadcast service by the UE in the broadcast mode in the connection establishment report, and record the priority information of each MBS broadcast service.

FIG. 8 is a schematic structural diagram of a terminal electronic device according to an embodiment of the present application. As shown in FIG. 8, the terminal electronic device includes a memory 820, a transceiver 810, and a processor 800, where the processor 800 and the memory 820 may also be physically separated.

The memory 820 is used for storing a computer program; and the transceiver 810 is used for receiving and transmitting data under control of the processor 800.

In FIG. 8, the bus architecture may include any number of interconnected buses and bridges, one or more processors represented by processor 800 and various circuits of the memory represented by memory 820 are linked together. The bus architecture may also link together various other circuits such as peripherals, voltage regulators, and power management circuits, which are all well known in the art and therefore are not described further herein. The bus interface provides an interface. The transceiver 810 may include multiple elements, including a transmitter and a receiver, units for providing communication with various other devices over transmission media, including wireless channels, wired channels, optical cables, and other transmission media. For different user equipments, a user interface 830 may also be an interface that may connect external and internal devices, including but not limited to small keyboards, displays, speakers, microphones, joysticks, etc.

The processor 800 is responsible for managing the bus architecture and general processing, and the memory 820 may store data used by the processor 800 when performing operations.

The processor 800 may be a central processing unit (CPU), an application specific integrated circuit (ASIC), a field-programmable gate array (FPGA) or a complex programmable logic device (CPLD), the processor may also adopt a multi-core architecture.

The processor 800 is used for executing any method applied to the terminal device provided by the embodiments of the present application based on an obtained executable instruction by invoking the computer program stored by the memory 820, for example:
obtaining failure information for a failure occurring on the terminal device, where the failure information includes service information associated with a multicast/broadcast service (MBS) service performed and/or supported by the terminal device; and
transmitting the failure information to a network side device.

In an embodiment, the service information associated with the MBS service is used to determine, by the network side device, whether to optimize a configured network parameter.

In an embodiment, obtaining the failure information for the failure occurring on the terminal device includes:
obtaining the failure information for the failure occurring on the terminal device in case of determining that a handover failure or a radio link failure (RLF) has occurred.

In an embodiment, the service information associated with the MBS service includes at least one of the following:
a service identifier of the MBS service;
a delivery mode corresponding to the MBS;
a priority of the MBS service; or
failure indication information;
where the failure indication information is used to represent that the failure occurs since the terminal device does not select an optimal cell for a handover to maintain continuity of a specified service, and the specified service includes the MBS service.

In an embodiment, the delivery mode includes one or more of: receiving MBS service in a broadcast mode, receiving MBS service in a multicast mode, or receiving MBS service in a unicast mode.

In an embodiment, the service information associated with the MBS service further includes a mapping between the delivery mode and the service identifier, where the service identifier of the MBS service includes a temporary mobile group identity (TMGI) and/or a service area identity (SAI).

In an embodiment, the priority of the MBS service includes at least one of the following:
a priority of the delivery mode corresponding to the MBS service; or
priorities of different MBS services in a same delivery mode.

In an embodiment, transmitting the failure information to the network side device includes:
transmitting the failure information to the network side device by carrying the failure information in at least one of the following reports:
an RLF report, a connection establishment failure report, a successful handover report, or a random access report.

FIG. 9 is a schematic structural diagram of a network side electronic device according to an embodiment of the present application. As shown in FIG. 9, the network side electronic device includes a memory 920, a transceiver 910, and a processor 900, where the processor 900 and the memory 920 may also be physically separated.

The memory 920 is used for storing a computer program; and the transceiver 910 is used for receiving and transmitting data under control of the processor 900.

In FIG. 9, the bus architecture may include any number of interconnected buses and bridges, one or more processors represented by processor 900 and various circuits of the memory represented by memory 920 are linked together. The bus architecture may also link together various other circuits such as peripherals, voltage regulators, and power management circuits, which are all well known in the art and therefore are not described further herein. The bus interface provides an interface. The transceiver 910 may include multiple elements, including a transmitter and a receiver, units for providing communication with various other devices over transmission media, including wireless channels, wired channels, optical cables, and other transmission media.

The processor 900 is responsible for managing the bus architecture and general processing, and the memory 920 may store data used by the processor 900 when performing operations.

The processor 900 may be a CPU, an ASIC, an FPGA or a CPLD, the processor may also adopt a multi-core architecture.

The processor 900 is used for executing any method applied to the network side device provided by the embodiments of the present application based on an obtained executable instruction by invoking the computer program stored by the memory 920, for example:
receiving failure information transmitted from a terminal device, where the failure information includes service information associated with a multicast/broadcast service (MBS) service performed and/or supported by the terminal device; and
determining whether to optimize a configured network parameter based on the service information associated with the MBS service.

In an embodiment, determining whether to optimize the configured network parameter based on the service information associated with the MBS service includes:
in case that the service information associated with the MBS service includes failure indication information, determining to not optimize the configured network parameter; or
in case that the service information associated with the MBS service does not include failure indication information and the service information associated with the MBS service indicates that the terminal device is performing the MBS service, determining to not optimize the configured network parameter.

It should be noted that the terminal electronic device and the network side electronic device provided in the embodiments of the present application may achieve all the method steps implemented in the above method embodiments and achieve the same technical effect. Therefore, the same parts and beneficial effects as in the method embodiments of the present application are not elaborated in detail.

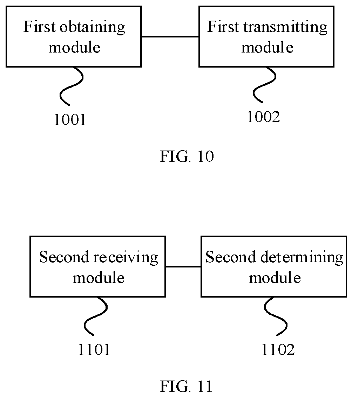

FIG. 10 is a first schematic structural diagram of an apparatus for processing information according to an embodiment of the present application. As shown in FIG. 10, the apparatus includes:
a first obtaining module 1001, used for obtaining failure information for a failure occurring on the terminal device, where the failure information includes service information associated with a multicast/broadcast service (MBS) service performed and/or supported by the terminal device; and
a first transmitting module 1002, used for transmitting the failure information to a network side device.

In an embodiment, the service information associated with the MBS service is used to determine, by the network side device, whether to optimize a configured network parameter.

In an embodiment, the first obtaining module 1001 is further used for:
obtaining the failure information for the failure occurring on the terminal device in case of determining that a handover failure or a radio link failure (RLF) has occurred.

In an embodiment, the service information associated with the MBS includes at least one of the following:
a service identifier of the MBS service;
a delivery mode corresponding to the MBS service;
a priority of the MBS service; or
failure indication information;
where the failure indication information is used to represent that the failure occurs since the terminal device does not select an optimal cell for a handover to maintain continuity of a specified service, and the specified service includes the MBS service.

In an embodiment, the delivery mode includes one or more of: receiving MBS service in a broadcast mode, receiving MBS service in a multicast mode, or receiving MBS service in a unicast mode.

In an embodiment, the service information associated with the MBS service further includes a mapping between the delivery mode and the service identifier, where the service identifier of the MBS service includes a temporary mobile group identity (TMGI) and/or a service area identity (SAI).

In an embodiment, the priority of the MBS service includes at least one of the following:
a priority of the delivery mode corresponding to the MBS service; or
priorities of different MBS services in a same delivery mode.

In an embodiment, the first transmitting module 1002 is further used for:
transmitting the failure information to the network side device by carrying the failure information in at least one of the following reports:
an RLF report, a connection establishment failure report, a successful handover report, or a random access report.

FIG. 11 is a second schematic structural diagram of an apparatus for processing information according to an embodiment of the present application. As shown in FIG. 11, the apparatus includes:
a second receiving module 1101, used for receiving failure information transmitted from a terminal device, where the failure information includes service information associated with a multicast/broadcast service (MBS) service performed and/or supported by the terminal device; and
a second determining module 1102, used for determining whether to optimize a configured network parameter based on the service information associated with the MBS service.

In an embodiment, the second determining module 1102 is further used for:
in case that the service information associated with the MBS service includes failure indication information, determining to not optimize the configured network parameter; or
in case that the service information associated with the MBS service does not include the failure indication information and the service information associated with the MBS service indicates that the terminal device is performing the MBS service, determining to not optimize the configured network parameter.

It should be noted that, the division of units in the embodiments of the present application is schematic, and is only a logical function division, and other division manners may be performed in actual implementation. In an embodiment, the functional units in the various embodiments of the present application may be integrated into one processing unit, or each unit may exist alone physically, or two or more units may be integrated into one unit. The aforementioned integrated unit may be implemented in the form of hardware or software functional unit.

In case that the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as USB flash disk, mobile hard disk, read-only memory (ROM), random access memory (RAM), magnetic disk, or optical disk.

It should be noted that the above apparatus provided in the embodiments of the present application may achieve all the method steps implemented in the above method embodiments and achieve the same technical effects. The same parts and beneficial effects as in the method embodiment are not elaborated in detail here.

An embodiment of the present application further provides a processor-readable storage medium storing a computer program for causing a processor to execute the method for processing information provided in the aforementioned embodiments, including:
obtaining failure information for a failure occurring on the terminal device, where the failure information includes service information associated with a multicast/broadcast service (MBS) service performed and/or supported by the terminal device; and
transmitting the failure information to a network side device.

In an embodiment, the service information associated with the MBS service is used to determine, by the network side device, whether to optimize a configured network parameter.

In an embodiment, obtaining the failure information for the failure occurring on the terminal device includes:
obtaining the failure information for the failure occurring on the terminal device in case of determining that a handover failure or a radio link failure (RLF) has occurred.

In an embodiment, the service information associated with the MBS service includes at least one of the following:
a service identifier of the MBS service;
a delivery mode corresponding to the MBS service;
a priority of the MBS service; or
failure indication information;
where the failure indication information is used to represent that the failure occurs since the terminal device does not select an optimal cell for a handover to maintain continuity of a specified service, and the specified service includes the MBS service.

In an embodiment, the delivery mode includes one or more of: receiving MBS service in a broadcast mode, receiving MBS service in a multicast mode, or receiving MBS service in a unicast mode.

In an embodiment, the service information associated with the MBS further includes a mapping between the delivery mode and the service identifier, where the service identifier of the MBS includes a temporary mobile group identity (TMGI) and/or a service area identity (SAI).

In an embodiment, the priority of the MBS includes at least one of the following:
a priority of the delivery mode corresponding to the MBS; or
priorities of different MBS services in a same delivery mode.

An embodiment of the present application further provides a processor-readable storage medium storing a computer program for causing a processor to execute the method for processing information provided in the aforementioned embodiments, including:
receiving failure information transmitted from a terminal device, where the failure information includes service information associated with a multicast/broadcast service (MBS) service performed and/or supported by the terminal device; and
determining whether to optimize a configured network parameter based on the service information associated with the MBS service.

In an embodiment, determining whether to optimize the configured network parameter based on the service information associated with the MBS service includes:
in case that the service information associated with the MBS service includes failure indication information, determining to not optimize the configured network parameter; or
in case that the service information associated with the MBS service does not include the failure indication information and the service information associated with the MBS service indicates that the terminal device is performing the MBS service, determining to not optimize the configured network parameter.

An embodiment of the present application further provides a computer-readable storage medium, where the computer-readable storage medium stores a computer program for causing a processor to execute the method for processing information provided in the aforementioned embodiments, including:
obtaining failure information for a failure occurring on the terminal device, where the failure information includes service information associated with a multicast/broadcast service (MBS) service performed and/or supported by the terminal device; and
transmitting the failure information to a network side device.

In an embodiment, the service information associated with the MBS service is used to determine, by the network side device, whether to optimize a configured network parameter.

In an embodiment, obtaining the failure information for the failure occurring on the terminal device includes:
obtaining the failure information for the failure occurring on the terminal device in case of determining that a handover failure or a radio link failure (RLF) has occurred.

In an embodiment, the service information associated with the MBS service includes at least one of the following:
a service identifier of the MBS service;
a delivery mode corresponding to the MBS service;
a priority of the MBS service; or
failure indication information;
where the failure indication information is used to represent that the failure occurs since the terminal device does not select an optimal cell for a handover to maintain continuity of a specified service, and the specified service includes the MBS service.

In an embodiment, the delivery mode includes one or more of: receiving MBS service in a broadcast mode, receiving MBS service in a multicast mode, or receiving MBS service in a unicast mode.

In an embodiment, the service information associated with the MBS service further includes a mapping between the delivery mode and the service identifier, where the service identifier of the MBS service includes a temporary mobile group identity (TMGI) and/or a service area identity (SAI).

In an embodiment, the priority of the MBS service includes at least one of the following:
a priority of the delivery mode corresponding to the MBS service; or
priorities of different MBS services in a same delivery mode.

An embodiment of the present application further provides a computer-readable storage medium, where the computer-readable storage medium stores a computer program for causing a processor to execute the method for processing information provided in the aforementioned embodiments, including:
receiving failure information transmitted from a terminal device, where the failure information includes service information associated with a multicast/broadcast service (MBS) service performed and/or supported by the terminal device; and
determining whether to optimize a configured network parameter based on the service information associated with the MBS service.

In an embodiment, determining whether to optimize the configured network parameter based on the service information associated with the MBS service includes:
in case that the service information associated with the MBS service includes failure indication information, determining to not optimize the configured network parameter; or
in case that the service information associated with the MBS service does not include the failure indication information and the service information associated with the MBS service indicates that the terminal device is performing the MBS service, determining to not optimize the configured network parameter.

An embodiment of the present application further provides a chip product, where the chip product stores a computer program for causing a processor to execute the method for processing information provided in the aforementioned embodiments, including:
obtaining failure information for a failure occurring on the terminal device, where the failure information includes service information associated with a multicast/broadcast service (MBS) service performed and/or supported by the terminal device; and
transmitting the failure information to a network side device.

In an embodiment, the service information associated with the MBS service is used to determine, by the network side device, whether to optimize a configured network parameter.

In an embodiment, obtaining the failure information for the failure occurring on the terminal device includes:
obtaining the failure information for the failure occurring on the terminal device in case of determining that a handover failure or a radio link failure (RLF) has occurred.

In an embodiment, the service information associated with the MBS service includes at least one of the following:
a service identifier of the MBS service;
a delivery mode corresponding to the MBS service;
a priority of the MBS service; or
failure indication information;
where the failure indication information is used to represent that the terminal device does not select an optimal cell for a handover to maintain continuity of a specified service and the specified service includes the MBS service.

In an embodiment, the delivery mode includes one or more of: receiving MBS service in a broadcast mode, receiving MBS service in a multicast mode, or receiving MBS service in a unicast mode.

In an embodiment, the service information associated with the MBS service further includes a mapping between the delivery mode and the service identifier, where the service identifier of the MBS service includes a temporary mobile group identity (TMGI) and/or a service area identity (SAI).

In an embodiment, the priority of the MBS includes at least one of the following:
a priority of the delivery mode corresponding to the MBS service; or
priorities of different MBS services in a same delivery mode.

An embodiment of the present application further provides a chip product, where the chip product stores a computer program for causing a processor to execute the method for processing information provided in the aforementioned embodiments, including:
receiving failure information transmitted from a terminal device, where the failure information includes service information associated with a multicast/broadcast service (MBS) service performed and/or supported by the terminal device; and
determining whether to optimize a configured network parameter based on the service information associated with the MBS service.

In an embodiment, determining whether to optimize the configured network parameter based on the service information associated with the MBS service includes:
in case that the service information associated with the MBS service includes failure indication information, determining to not optimize the configured network parameter; or
in case that the service information associated with the MBS service does not include the failure indication information and the service information associated with the MBS service indicates that the terminal device is performing the MBS service, determining to not optimize the configured network parameter.

The processor-readable storage medium may be any available medium or data storage device that a processor may access, including but not limited to magnetic memory (for example, floppy disks, hard disks, magnetic tapes, magneto-optical disks (MO), etc.), optical memory (for example, CDs, DVDs, BDs, HVDs, etc.), and semiconductor memory (for example, ROM, EPROM, EEPROM, non-volatile memory (NAND FLASH), solid-state drive (SSD), etc.).

The solutions provided in the embodiments of the present application may be applicable to various systems, especially 5G systems. For example, the applicable systems may be the global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include terminal devices and network devices. The system may also include a core network component, such as the evolved packet system (EPS), 5G system (5GS), etc.

The network side device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network side device in the embodiments of the present application may be a base transceiver station (BTS) in a global system for mobile communications (GSM) or a code division multiple access (CDMA), or may be a node B in a wide-band code division multiple access (WCDMA), or may be an evolutional NodeB (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application.

A multi-input multi-output (MIMO) transmission may be performed between the network device and the terminal by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

Those skilled in the art should understand that embodiments disclosed herein may be provided as methods, systems, or computer program products. Therefore, the present application may take a form of complete hardware embodiments, complete software embodiments, or embodiments combining software and hardware. Moreover, the present application may take a form of computer program products implemented on one or more computer available storage medium (including but not limited to disk storage, optical storage, etc.) containing computer available program codes.

The present application is described with reference to the flowcharts and/or block diagrams of the methods and devices (systems), and computer program product according to the embodiments of the present application. It should be understood that each process and/or box in the flowchart and/or block diagram, as well as the combination of processes and/or boxes in the flowchart and/or block diagram, may be implemented by computer executable instructions. These computer executable instructions may be provided to processors of general-purpose computers, specialized computers, embedded processors, or other programmable data processing devices to generate a machine, allowing instructions executed by processors of computers or other programmable data processing devices to generate devices for implementing functions specified in one or more steps of a flowchart or one or more blocks in a block diagram.

These processor executable instructions may also be stored in a processor readable memory that may guide computers or other programmable data processing devices to work in a specific way, causing the instructions stored in the processor readable memory to generate manufactures including an instruction device, the instruction device implementing the functions specified in one or more processes and/or blocks of a flowchart.

These processor executable instructions may also be loaded onto a computer or other programmable data processing device to perform a series of operational steps on the computer or other programmable device to generate computer-implemented processing. The instructions executed on the computer or other programmable device provide steps for implementing the functions specified in one or more processes and/or blocks of a flowchart.

Those skilled in the art may make various modifications and variations to the present application without departing from the scope of the present application. In this way, if these modifications and variations of the present application fall within the scope of the claims and their equivalent, the present application also intends to include these modifications and variations.

## Claims

1. A method for processing information, applied to a terminal device, comprising:
obtaining failure information for a failure occurring on the terminal device, wherein the failure information comprises service information associated with a multicast/broadcast service, MBS, service performed and/or supported by the terminal device; and
transmitting the failure information to a network side device.

2. The method of claim 1, wherein the service information associated with the MBS service is used to determine, by the network side device, whether to optimize a configured network parameter.

3. The method of claim 1, wherein obtaining the failure information for the failure occurring on the terminal device comprises:
obtaining the failure information for the failure occurring on the terminal device in case of determining that a handover failure or a radio link failure, RLF, has occurred.

4. The method of claim 1, wherein the service information associated with the MBS service comprises at least one of the following:
a service identifier of the MBS service;
a delivery mode corresponding to the MBS service;
a priority of the MBS service; or
failure indication information;
wherein the failure indication information is used to represent that the failure occurs since the terminal device does not select an optimal cell for a handover to maintain continuity of a specified service and the specified service comprises the MBS service.

5. The method of claim 4, wherein the delivery mode comprises one or more of: receiving MBS service in a broadcast mode, receiving MBS service in a multicast mode, or receiving MBS service in a unicast mode.

6. The method of claim 4, wherein the service information associated with the MBS service further comprises a mapping between the delivery mode and the service identifier, the service identifier of the MBS service comprising a temporary mobile group identity, TMGI, and/or a service area identity, SAI.

7. The method of claim 4, wherein the priority of the MBS service comprises at least one of the following:
a priority of the delivery mode corresponding to the MBS service; or
priorities of different MBS services in a same delivery mode.

8. The method of claim 1, wherein transmitting the failure information to the network side device comprises:
transmitting the failure information to the network side device by carrying the failure information in at least one of the following reports:
an RLF report, a connection establishment failure report, a successful handover report, or a random access report.

9. A method for processing information, applied to a network side device, comprising:
receiving failure information transmitted from a terminal device, wherein the failure information comprises service information associated with a multicast/broadcast service, MBS, service performed and/or supported by the terminal device; and
determining whether to optimize a configured network parameter based on the service information associated with the MBS service.

10. The method of claim 9, wherein determining whether to optimize the configured network parameter based on the service information associated with the MBS service comprises:
in case that the service information associated with the MBS service comprises failure indication information, determining to not optimize the configured network parameter; or
in case that the service information associated with the MBS service does not comprise failure indication information and the service information associated with the MBS service indicates that the terminal device is performing the MBS service, determining to not optimize the configured network parameter.

11. A terminal electronic device, comprising a memory, a transceiver, and a processor,
wherein the memory is used for storing a computer program, the transceiver is used for transmitting and receiving data under control of the processor, and the processor is used for executing the computer program in the memory and performing the following steps:
obtaining failure information for a failure occurring on the terminal device, wherein the failure information comprises service information associated with a multicast/broadcast service, MBS, service performed and/or supported by the terminal device; and
transmitting the failure information to a network side device.

12. The terminal electronic device of claim 11, wherein the service information associated with the MBS service is used to determine, by the network side device, whether to optimize a configured network parameter.

13. The terminal electronic device of claim 11, wherein obtaining the failure information for the failure occurring on the terminal device comprises:
obtaining the failure information for the failure occurring on the terminal device in case of determining that a handover failure or a radio link failure, RLF, has occurred.

14. The terminal electronic device of claim 11, wherein the service information associated with the MBS service comprises at least one of the following:
a service identifier of the MBS service;
a delivery mode corresponding to the MBS service;
a priority of the MBS service; or
failure indication information;
wherein the failure indication information is used to represent that the failure occurs since the terminal device does not select an optimal cell for a handover to maintain continuity of a specified service and the specified service comprises the MBS service.

15. The terminal electronic device of claim 14, wherein the delivery mode comprises one or more of: receiving MBS service in a broadcast mode, receiving MBS service in a multicast mode, or receiving MBS service in a unicast mode.

16. The terminal electronic device of claim 14, wherein the service information associated with the MBS service further comprises a mapping between the delivery mode and the service identifier, the service identifier of the MBS service comprising a temporary mobile group identity, TMGI, and/or a service area identity, SAI.

17. The terminal electronic device of claim 14, wherein the priority of the MBS service comprises at least one of the following:
a priority of the delivery mode corresponding to the MBS service; or
priorities of different MBS services in a same delivery mode.

18. The terminal electronic device of claim 11, wherein transmitting the failure information to the network side device comprises:
transmitting the failure information to the network side device by carrying the failure information in at least one of the following reports:
an RLF report, a connection establishment failure report, a successful handover report, or a random access report.

19. A network side electronic device, comprising a memory, a transceiver, and a processor, wherein the memory is used for storing a computer program, the transceiver is used for transmitting and receiving data under control of the processor, and the processor is used for executing the computer program in the memory and performing the following steps:
receiving failure information transmitted from a terminal device, wherein the failure information comprises service information associated with a multicast/broadcast service, MBS, service performed and/or supported by the terminal device; and
determining whether to optimize a configured network parameter based on the service information associated with the MBS service.

20. The network side electronic device of claim 19, wherein determining whether to optimize the configured network parameter based on the service information associated with the MBS service comprises:
in case that the service information associated with the MBS service comprises failure indication information, determining to not optimize the configured network parameter; or
in case that the service information associated with the MBS service does not comprise failure indication information and the service information associated with the MBS service indicates that the terminal device is performing the MBS service, determining to not optimize the configured network parameter.

21. An apparatus for processing information, comprising:
a first obtaining module, used for obtaining failure information for a failure occurring on the terminal device, wherein the failure information comprises service information associated with a multicast/broadcast service, MBS, service performed and/or supported by the terminal device; and
a first transmitting module, used for transmitting the failure information to a network side device.

22. The apparatus of claim 21, wherein the service information associated with the MBS is used to determine, by the network side device, whether to optimize a configured network parameter.

23. The apparatus of claim 21, wherein the first obtaining module is further used for:
obtaining the failure information for the failure occurring on the terminal device in case of determining that a handover failure or a radio link failure, RLF, has occurred.

24. The apparatus of claim 21, wherein the service information associated with the MBS service comprises at least one of the following:
a service identifier of the MBS service;
a delivery mode corresponding to the MBS service;
a priority of the MBS service; or
failure indication information;
wherein the failure indication information is used to represent that the failure occurs since the terminal device does not select an optimal cell for a handover to maintain continuity of a specified service and the specified service comprises the MBS service.

25. The apparatus of claim 24, wherein the delivery mode comprises one or more of:
receiving MBS service in a broadcast mode, receiving MBS service in a multicast mode, or receiving MBS service in a unicast mode.

26. The apparatus of claim 24, wherein the service information associated with the MBS service further comprises a mapping between the delivery mode and the service identifier, the service identifier of the MBS service comprising a temporary mobile group identity, TMGI, and/or a service area identity, SAI.

27. The apparatus of claim 24, wherein the priority of the MBS service comprises at least one of the following:
a priority of the delivery mode corresponding to the MBS service; or
priorities of different MBS services in a same delivery mode.

28. The apparatus of claim 21, wherein the first transmitting module is further used for:
transmitting the failure information to the network side device by carrying the failure information in at least one of the following reports:
an RLF report, a connection establishment failure report, a successful handover report, or a random access report.

29. An apparatus for processing information, comprising:
a second receiving module, used for receiving failure information transmitted from a terminal device, wherein the failure information comprises service information associated with a multicast/broadcast service, MBS, service performed and/or supported by the terminal device; and
a second determining module, used for determining whether to optimize a configured network parameter based on the service information associated with the MBS service.

30. The apparatus of claim 29, wherein the second determining module is further used for:
in case that the service information associated with the MBS service comprises failure indication information, determining to not optimize the configured network parameter; or
in case that the service information associated with the MBS service does not comprise failure indication information and the service information associated with the MBS service indicates that the terminal device is performing the MBS service, determining to not optimize the configured network parameter.

31. A computer-readable storage medium, wherein the computer-readable storage medium stores a computer program for causing a processor to execute any of the methods of claims 1 to 8.

32. A computer-readable storage medium, wherein the computer-readable storage medium stores a computer program for causing a processor to execute any of the methods of claims 9 to 10.
